# EUROPÄISCHE PATENTSCHRIFT

(11) **EP 1 611 995 B1**
(45) Veröffentlichungstag und Bekanntmachung des Hinweises auf die Patenterteilung: **28.10.2009**
(21) Anmeldenummer: 04015560.8
(22) Anmeldetag: 01.07.2004
(51) Int. Cl.: B24B 31/116

(54) **Verfahren und Vorrichtung zum abrasiven Bearbeiten einer Durchgangsöffnung mit einem Abtragungsfluid**
Method and apparatus for abrasively machining a channel port with an abrasive fluid
Procédé et dispositif pour éroder un orifice au moyen d'un fluide abrasif

(43) Veröffentlichungstag der Anmeldung: 04.01.2006
(73) Patentinhaber: Sonplas GmbH, 94315 Straubing (DE)
(72) Erfinder: Thoma, Michael, 9437 Ascha (DE); Weikenstorfer, Thomas, 93086 Wörth/Donau (DE); Hasenecker, Thomas, 94333 Geiselhöring (DE)
(74) Vertreter: Wunderlich, Rainer

(56) Entgegenhaltungen:
- EP-A- 0 844 920

## Beschreibung

Die Erfindung betrifft ein Verfahren zum abrasiven Bearbeiten einer Durchgangsöffnung in einem Bauteil, insbesondere einer Steuer- und/oder Düsenbohrung eines Kraftstoffeinspritzventiles, mit einem Abtragungsfluid. Die Erfindung betrifft ferner eine Vorrichtung zum abrasiven Bearbeiten einer Durchgangsöffnung in einem Bauteil mit einem Abtragungsfluid gemäß dem Oberbegriff des Anspruchs 10. Eine gattungsgemäße Vorrichtung weist eine Pumpeinrichtung zum Fördern des Abtragungsfluids, eine Steuereinrichtung, die mit der Pumpeinrichtung in Wirkverbindung steht, eine Zuleitung zum Zuführen des Abtragungsfluids von der Pumpeinrichtung an die Durchgangsöffnung des Bauteils, und eine Messeinrichtung zum Bestimmen des Fluiddrucks in der Zuleitung und/oder des Fluidvolumenstroms durch die Durchgangsöffnung auf, wobei die Messeinrichtung mit der Steuereinrichtung in Signalverbindung steht.

Zur Feinstbearbeitung von Spritzlochbohrungen von Hochdruckeinspritzventilen, insbesondere zur Einstellung eines gewünschten Durchflusses und/oder zur gezielten Voralterung, sind hydroerosive Schleifverfahren bekannt, die zur Verrundung von Einlasskanten der Spritzlochbohrungen dienen können. Ein solches hydroerosives Schleifverfahren wird beispielsweise in der DE 197 58 660 B4 beschrieben.

Bei dem aus der DE 197 58 660 B4 bekannten Verfahren wird ein Material abtragendes Fluid so lange mit einem konstanten Volumenstrom durch die Durchgangsöffnung eines Bauteils geleitet, bis sich an der Durchgangsöffnung ein gewünschter Solldruck einstellt. Bei Erreichen dieses gewünschten Solldrucks wird der Bearbeitungsprozess abgeschaltet. Da der Druck an der Durchgangsöffnung und insbesondere das Erreichen des gewünschten Solldrucks mit vergleichsweise großer Präzision und weitestgehend verzögerungsfrei gemessen werden können, können mit dem bekannten Verfahren sehr gute Bearbeitungstoleranzen erreicht werden.

Allerdings kann sich bei dem bekannten hydroabrasiven Schleifverfahren mit zeitlich konstantem Schleifvolumenstrom zu Beginn der Bauteilbearbeitung am Bauteil eine große Drucküberhöhung einstellen. Eine solche große Drucküberhöhung kann sich insbesondere dann ergeben, wenn bei der Bearbeitung große Verrundungsgrade, d.h. große Durchflusserhöhungen ausgehend vom Startdurchfluss vor der Bearbeitung, erzielt werden sollen. Die großen Drucküberhöhungen bringen jedoch eine erhöhte Beanspruchung der zur Verfahrensdurchführung verwendeten Schleifvorrichtung mit sich.

Darüber hinaus hat sich bei der Durchführung des bekannten Schleifverfahrens mit zeitlich konstantem Schleifvolumenstrom gezeigt, dass bei der Bearbeitung von Bauteilen mit kleinem Verrundungsgrad die Durchgangsöffnungen im Einzelfall über den gewünschten Sollwert hinaus bearbeitet werden. Dies kann bedingen, dass die Schleifgeschwindigkeit durch Reduzierung der abrasiven Anteile im Fluid oder durch Reduzierung des Schleifdruckes vermindert werden muss, wodurch die Bearbeitungszeit verlängert wird.

Aus der EP 0 844 920 B1 ist ein Verfahren zum Bearbeiten einer Mikrobohrung mit einem Schmirgelschlamm bekannt, bei dem der Druck des Schmirgelschlammes zuströmseitig der Mikrobohrung konstant gehalten wird und die Fließgeschwindigkeit des Schlammes gemessen wird. Die Bearbeitung wird angehalten, wenn die Fließgeschwindigkeit des Schmirgelschlammes einen Sollwert erreicht. Da die Fließgeschwindigkeit und/oder der Volumenstrom jedoch nur mit vergleichsweise geringer Präzision und in der Regel nur mit einiger Verzögerung gemessen werden können, ist dieses bekannte Verfahren vergleichsweise ungenau.

Ein weiteres hydroabrasives Schleifverfahren, bei dem die Durchflussrate mit einem vorher bestimmten Sollwert verglichen wird, ist aus der US 6,575,815 B1 bekannt. Ein ähnliches Verfahren, bei dem jedoch ein visko-elastisches Abrasivmedium verwendet wird, geht auch aus der EP 0 277 957 B1 hervor.

**Aufgabe** der Erfindung ist es, ein Verfahren und eine Vorrichtung zum abrasiven Bearbeiten einer Durchgangsöffnung mit einem Abtragungsfluid anzugeben, die bei besonders hohen Standzeiten der Vorrichtung eine besonders präzise Bearbeitung ermöglichen.

Die Aufgabe wird erfindungsgemäß durch ein Verfahren mit den Merkmalen des Anspruchs 1 sowie durch eine Vorrichtung mit den Merkmalen des Anspruchs 10 gelöst. Bevorzugte Ausführungsbeispiele sind in den jeweils abhängigen Ansprüchen angegeben.

Bei dem erfindungsgemäßen Verfahren wird
- das Abtragungsfluid zunächst mit einem vorher bestimmten Fluiddruck durch die Durchgangsöffnung geleitet und ein sich dabei einstellender veränderlicher Fluidvolumenstrom durch die Durchgangsöffnung ermittelt, und
- bei Erreichen eines Umschaltwertes des ermittelten Fluidvolumenstroms das Abtragungsfluid fortan so lange mit konstantem Fluidvolumenstrom durch die Durchgangsöffnung geleitet und der sich dabei einstellende Fluiddruck ermittelt, bis der ermittelte Fluiddruck einen Sollwert des Druckes erreicht.

Der Erfindung liegt die Erkenntnis zugrunde, dass sich bei einem hydroerosiven Verfahren, bei dem mit konstantem Schleifvolumenstrom auf einen gewünschten Solldruck am Bauteil hingearbeitet wird, anfangs eine Erhöhung des Bearbeitungsdrucks einstellt, wobei der Druck nach Erreichen eines Maximums abnimmt und mit fortlaufender Bearbeitungsdauer auf den gewünschten Solldruck abfällt. Das Volumen des Schleifkreises verhält sich dabei ähnlich wie ein Kondensator, der durch einen konstanten Strom geladen werden muss. Parallel zu diesem Kondensator ist ein Widerstand angeordnet, welcher der zu bearbeitenden Durchgangsöffnung entspricht. Erst wenn der Kondensator vollständig geladen ist, wird der gesamte Strom über den Widerstand geleitet und es stellt sich ein quasi statischer Zustand im Kreis ein, der sich nur durch die langsame Verringerung des Widerstandswertes, entsprechend der Materialabtragung an der Durchgangsöffnung, ändert. Der Spannungsabfall am Widerstand entspricht dabei im Wesentlichen dem Druckabfall am Bauteil, der Strom dem Fluidvolumenstrom.

In der Anfangsphase eines hydroabrasiven Verfahrens mit konstantem Schleifvolumenstrom, in der der Fluiddruck bis zum Erreichen des Druckmaximums zunimmt, trägt also das Schleiffluid, das in den Schleifkreis gepumpt wird, wesentlich zur Druckerhöhung und nicht zum eigentlichen Schleifvorgang bei. Es hat sich gezeigt, dass in dieser Anfangsphase des Schleifvorganges im Schleifkreis vergleichsweise schwer kontrollierbare Strömungsverhältnisse herrschen und die Durchgangsöffnung lediglich mit vergleichsweise geringer Präzision bearbeitet werden kann. Insbesondere hat sich gezeigt, dass die beobachtete, vergleichsweise geringe Präzision bei der Bearbeitung von Bauteilen mit kleinem Verrundungsgrad, auf diese besonderen Strömungsverhältnisse in der Anfangsphase des Schleifvorganges zurückzuführen ist.

Ein Grundgedanke der Erfindung kann nun in einem zweiphasigen Schleifverfahren gesehen werden, bei dem in einer ersten Phase das Bauteil mit einem zeitlich konstanten Schleifmitteldruck beaufschlagt wird und in einer zweiten, finalen Phase die Durchgangsöffnung mit einem zeitlich konstanten Volumenstrom bearbeitet wird, und zwar so lange, bis sich der Druck an der Durchgangsöffnung auf den gewünschten Sollwert einstellt. Verglichen mit den vorbekannten Verfahren, bei denen durchgängig mit konstantem Fluidvolumenstrom gearbeitet wird, kann bei dem erfindungsgemäßen Verfahren der Fluiddruck in der ersten Phase der Bearbeitung erheblich reduziert sein, wodurch die Beanspruchung der Schleifvorrichtung verringert wird. Darüber hinaus kann erfindungsgemäß aufgrund des niedrigeren Fluiddrucks in der ersten Phase ein schnellerer Druckaufbau erfolgen, wodurch die Anfangsphase mit schwer kontrollierbaren Strömungsverhältnissen wesentlich verkürzt werden kann. Neben einer Erhöhung der Präzision bei der Bearbeitung erlaubt dies die Verwendung von aggressiveren Abtragungsfluiden, wodurch die Bearbeitungszeiten reduziert werden können. Dabei ermöglicht die zweite Schleifphase auch bei hohen Abtragungsgeschwindigkeiten eine besonders hohe Bearbeitungsqualität. Das erfindungsgemäße Verfahren verbindet also die Präzision, die sich bei einem Schleifverfahren mit konstantem Fluidvolumenstrom aufgrund der Präzision und der Zeitnähe der Fluiddruckmessung ergibt, mit den im Hinblick auf die Beanspruchung der Vorrichtung vorteilhaften, vergleichsweise niedrigen Fluiddrücken eines Schleifverfahrens mit konstantem Fluiddruck. Für eine besonders hohe Bearbeitungspräzision ist es dabei vorteilhaft, dass sich die zweite Bearbeitungsphase unmittelbar an die erste Bearbeitungsphase anschließt.

Das erfindungsgemäße Verfahren ist besonders geeignet für die Feinstbearbeitung von Bohrungen, insbesondere von Spritzlochbohrungen, von Hochdruckeinspritzdüsen. Derartige Bohrungen werden häufig durch Senkerodieren oder Bohren in die Bauteile eingebracht und besitzen üblicherweise Durchflusstoleranzen von bis zu etwa +/- 3-10%. Durch das erfindungsgemäße Verfahren können nach der Bearbeitung Durchflusstoleranzen von weniger als +/- 1% erzielt werden. Dabei können sich Verrundungsgrade, d.h. relative Durchflussratenerhöhungen während der Bearbeitung bezogen auf die ursprüngliche Durchflussrate vor der Bearbeitung, ergeben, die zwischen 2% und 35%, insbesondere im Mittel zwischen 5% und 25% liegen, wobei die Spanne in den anfänglichen Durchflusstoleranzen aufgrund der Vorbearbeitung begründet ist. Die unterschiedlichen Verrundungsgrade können sich unter anderem in unterschiedlichen Bearbeitungszeiten niederschlagen.

Unter dem vorher bestimmten Fluiddruck sowie unter dem Fluiddruck, der sich bei der Bearbeitung mit konstantem Fluidvolumenstrom an der Durchgangsöffnung einstellt, können erfindungsgemäß insbesondere solche Drücke verstanden werden, die in einer Zuleitung für das Abtragungsfluid oberstromig der Durchgangsöffnung herrschen. Eine solche Definition ist insbesondere dann sinnvoll, wenn das Abtragungsfluid im Wesentlichen drucklos aus der Durchgangsöffnung austritt. Unter den genannten Fluiddrücken können jedoch auch Druckdifferenzen verstanden werden, die sich entlang der Durchgangsöffnung beim Durchgang des Abtragungsfluides einstellen, und die durch Druckmessung sowohl oberstromig als auch unterstromig der Durchgangsöffnung bestimmt werden können. Vorteilhafterweise ist der vorher bestimmte Fluiddruck zeitlich konstant. Geeigneterweise beträgt der vorher bestimmte Fluiddruck zumindest annähernd 100 bar, wodurch sich bei hinreichend kurzer Anfangsphase ausreichend hohe Fluidvolumenströme und somit hohe Bearbeitungsraten erzielen lassen.

Besonders vorteilhaft ist es nach der Erfindung, dass der konstante Fluidvolumenstrom einem Betriebsvolumenstrom des fertigen Bauteils entspricht. Unter dem Betriebsvolumenstrom des fertigen Bauteils kann insbesondere der Volumenstrom verstanden werden, der sich beim verwendungszweckgemäßen Betrieb des fertig gearbeiteten Bauteils beim Durchgang einer Betriebsflüssigkeit durch die Durchgangsöffnung einstellt. Diese Ausführungsform ist insbesondere dann von Vorteil, wenn das Abtragungsfluid ähnliche Materialeigenschaften, insbesondere eine ähnlich Viskosität, verglichen mit der Betriebsflüssigkeit aufweist. In diesem Fall ist es möglich, die während dem abrasiven Bearbeiten ermittelten Kenngrößen der Durchgangsöffnung unmittelbar mit den Betriebskenngrößen des fertigen Bauteils in Beziehung zu setzen.

Besonders vorteilhaft ist es ferner, dass der Umschaltwert des Fluidvolumenstromes zumindest annähernd gleich dem konstanten Fluidvolumenstrom ist. Hierdurch wird gewährleistet, dass sich beim Umschalten zwischen der ersten Bearbeitungsphase mit vorher bestimmtem Fluiddruck und der zweiten Bearbeitungsphase mit konstantem Fluidvolumenstrom allenfalls eine kleine Druckstörung im Schleifkreis ergibt, die rasch wieder abklingen kann und somit den Schleifprozess nicht weiter beeinflusst. Ferner wird gewährleistet, dass eine Kolbenvorschubgeschwindigkeit einer gegebenenfalls zur Förderung des Abtragungsfluides eingesetzten Kolbenpumpe beim Umschalten zwischen den beiden Bearbeitungsphasen allenfalls unwesentlich verändert werden muss. Dies ermöglicht eine besonders einfache Steuerung und Konstruktion der Kolbenpumpe.

Eine besonders bevorzugte Ausführungsform der Erfindung liegt ferner darin, dass der Umschaltwert des Fluidvolumenstromes höchstens 5%, insbesondere etwa 1%, über einem Sollwert des Fluidvolumenstromes liegt. Unter dem Sollwert des Fluidvolumenstromes kann insbesondere ein solcher Wert verstanden werden, bei dem die abrasive Bearbeitung mit konstantem Fluiddruck ohne darauf folgende Bearbeitung mit konstantem Fluidvolumenstrom abzubrechen wäre. Bei dem Sollwert des Fluidvolumenstroms kann es sich insbesondere um den Betriebsvolumenstrom des fertigen Bauteils handeln. Durch die Wahl des Umschaltwertes knapp oberhalb des Sollwertes kann erreicht werden, dass die zweite Bearbeitungsphase mit konstantem Fluidvolumenstrom kurz gegenüber der ersten Bearbeitungsphase mit vorher bestimmtem Fluiddruck ist. Hierdurch können bei hoher Präzision der Bearbeitung besonders kurze Bearbeitungszeiten erreicht werden.

Ein besonders geringer apparativer Aufwand kann nach der Erfindung dadurch gegeben sein, dass das Abtragungsfluid beim Bearbeiten der Durchgangsöffnung mit vorher bestimmtem Fluiddruck und beim Bearbeiten der Durchgangsöffnung mit konstantem Fluidvolumenstrom mittels einer Pumpeinrichtung zur Durchgangsöffnung gefördert wird, wobei die Pumpeinrichtung insbesondere eine hydraulisch unterstützte und durch einen Schrittmotor betriebene Kolbenpumpe aufweist. Besonders vorteilhaft ist es dabei, dass sowohl während der ersten Bearbeitungsphase mit vorher bestimmtem Fluiddruck als auch während der zweiten Bearbeitungsphase mit konstantem Fluidvolumenstrom dieselbe Pumpeinrichtung, insbesondere dieselbe Kolbenpumpe, zur Förderung des Abtragungsfluides verwendet wird. Zur hydraulischen Unterstützung wird ein Kolben der Kolbenpumpe geeigneterweise auf seiner dem zu fördernden Abtragungsfluid abgewandten Seite mit einem Hydraulikfluid mit einem vorher bestimmten Hydraulikdruck beaufschlagt. Der Schrittmotor ist geeigneterweise zum Verschieben des Kolbens in Axialrichtung der Kolbenpumpe ausgebildet.

Eine besonders einfache Verfahrenssteuerung kann nach der Erfindung dadurch gegeben sein, dass der Schrittmotor beim Bearbeiten der Durchgangsöffnung mit vorher bestimmtem Fluiddruck momentfrei geschaltet wird, und dass der Schrittmotor beim Erreichen des Umschaltwertes des ermittelten Fluidvolumenstromes zum Erzeugen eines konstanten Kolbenvorschubes der Kolbenpumpe zugeschaltet wird. Bei dieser Verfahrensführung wird der Schrittmotor in der ersten Bearbeitungsphase momentfrei geschaltet, weshalb hierbei die Axialbewegung des Kolbens der Kolbenpumpe nicht durch den Schrittmotor beeinflusst wird und der Hydraulikdruck der hydraulischen Unterstützung über den Kolben unmittelbar auf das Abtragungsfluid weitergegeben wird. In diesem Fall bestimmt sich der Fluiddruck allein durch den Hydraulikdruck, wobei dieser Hydraulikdruck beispielsweise mittels eines Ventiles auf den gewünschten Fluiddruck geregelt werden kann. Während der zweiten Bearbeitungsphase mit konstantem Fluidvolumenstrom hingegen wird der Schrittmotor derart zugeschaltet, dass dieser den Kolben mit konstanter Geschwindigkeit in der Kolbenpumpe vorschiebt, wodurch sich der erwünschte konstante Fluidvolumenstrom einstellt. Dabei wird geeigneterweise die dem Abtragungsfluid abgewandte Rückseite des Kolbens weiterhin mit Hydraulikfluid beaufschlagt, so dass der Schrittmotor lediglich gegen die Druckdifferenz zwischen Abtragungsfluid und Hydraulikfluid arbeiten muss und nicht den gesamten Abtragungsfluiddruck überwinden muss. Hierdurch wird die Kolbenpumpe auch im zweiten Bearbeitungsschritt hydraulisch unterstützt.

Zum Bestimmen des veränderlichen Fluidvolumenstroms in der ersten Bearbeitungsphase kann grundsätzlich eine Volumenstromerfassungseinrichtung, insbesondere eine Coriolis-Durchflussmesseinrichtung, im Schleifkreis oberstromig oder unterstromig der Durchgangsöffnung betrieben werden. Alternativ oder zusätzlich kann vorgesehen sein, dass zum Ermitteln des veränderlichen Fluidvolumenstroms die Kolbenvorschubgeschwindigkeit der Kolbenpumpe bestimmt wird. Dies ermöglicht eine besonders einfache und präzise Messung des Fluidvolumenstroms.

Grundsätzlich ist es möglich, den vorher bestimmten Fluiddruck während der ersten Bearbeitungsphase zeitlich konstant zu wählen. Besonders vorteilhaft ist es jedoch, dass der vorher bestimmte Fluiddruck vor Erreichen des Umschaltwertes des Fluidvolumenstroms variiert, insbesondere schrittweise oder kontinuierlich reduziert wird. Ein Variieren des Fluiddrucks wird dabei geeigneterweise zu Beginn der ersten Bearbeitungsphase durchgeführt. Hierdurch ist es beispielsweise möglich, anfangs einen höheren Bearbeitungsdruck im Schleifkreis zu erzeugen, um die Bearbeitungsgeschwindigkeit weiter zu erhöhen und den Bearbeitungsvorgang weiter zu beschleunigen. Dieser Druck kann dann schrittweise oder kontinuierlich während der ersten Phase des Schleifvorganges, insbesondere auf einen Solldruck, reduziert werden.

Grundsätzlich ist es ferner möglich, das durch die Durchgangsöffnung tretende Abtragungsfluid drucklos aus dieser herauszuleiten. In diesem Fall kann das Abtragungsfluid beispielsweise nach Durchgang durch die Durchgangsöffnung in ein teilweise geöffnetes Sammelbehältnis geführt werden, in dem Atmosphärendruck herrscht. Um die Präzision der Bearbeitung weiter zu erhöhen, kann es jedoch vorteilhaft sein, dass beim Durchleiten des Abtragungsfluides durch die Durchgangsöffnung ein Gegendruck erzeugt wird. Hierunter kann verstanden werden, dass die Durchgangsöffnung auf ihren beiden Seiten mit einem Druck beaufschlagt wird, der höher als der Atmosphärendruck ist. Durch Anlegen eines Gegendruckes ist es insbesondere möglich, eine Kaviation des Abtragungsfluides beim Durchgang durch die Durchgangsöffnung zu vermeiden und/oder die Betriebsbedingungen des fertigen Bauteils während des Bearbeitungsvorgangs nachzustellen. Auch kann ein Gegendruck dazu erzeugt werden, die Strömungsgeschwindigkeit des Abtragungsfluides zu verlangsamen und somit die Bearbeitungsgeschwindigkeit zu reduzieren. Ein Gegendruck kann während der ersten Bearbeitungsphase, während der zweiten Bearbeitungsphase oder während beiden Bearbeitungsphasen vorgesehen werden.

Bei dem Abtragungsfluid kann es sich grundsätzlich um ein beliebiges strömungsfähiges Kontinuum handeln, das auf die Wände und Kanten der Durchgangsöffnung beim Vorbeiströmen eine Material abtragende Wirkung ausübt. Ein besonders vorteilhaftes Ausführungsbeispiel der Erfindung ist jedoch dadurch gekennzeichnet, dass das Abtragungsfluid eine Flüssigkeit mit Abrasivpartikeln aufweist, wobei die Flüssigkeit insbesondere eine Viskosität aufweist, die einer Viskosität der Betriebsflüssigkeit des fertigen Bauteils entspricht. Bei der Betriebsflüssigkeit kann es sich beispielsweise um einen flüssigen mineralischen Kraftstoff, beispielsweise um Bezinkraftstoff oder um Dieselkraftstoff handeln. Vorteilhafterweise weist das Abtragungsfluid die Betriebsflüssigkeit selbst auf. Geeigneterweise handelt es sich bei dem Abtragungsfluid um eine Flüssigkeit. Das Fluid kann auch magnetorheologische, elektrorheologische und/oder thixotrope Eigenschaften aufweisen.

Die erfindungsgemäße Vorrichtung ist dadurch gekennzeichnet, dass die Steuereinrichtung zum Steuern der Pumpeinrichtung in der Weise ausgebildet ist, dass das Abtragungsfluid zunächst mit einem vorher bestimmten Fluiddruck bei veränderlichem Fluidvolumenstrom durch die Durchgangsöffnung geleitet wird und bei Erreichen eines Umschaltwertes des Fluidvolumenstroms das Abtragungsfluid fortan mit konstantem Fluidvolumenstrom durch die Durchgangsöffnung geleitet wird. Die erfindungsgemäße Vorrichtung ist insbesondere zum Durchführen des erfindungsgemäßen Verfahrens geeignet, wodurch die in diesem Zusammenhang erläuterten Vorteile erzielt werden können.

Die Pumpeinrichtung, die erfindungsgemäß das Abtragungsfluid mit dem Fluiddruck beaufschlagt und dieses über die Zuleitung an die Durchgangsöffnung fördert, wird erfindungsgemäß mittels der Steuereinrichtung gesteuert. Die Pumpensteuerung durch die Steuereinrichtung erfolgt dabei in Abhängigkeit vom Fluiddruck und/oder dem Fluidvolumenstrom des Abtragungsfluides, wobei diese Parameter von der Messeinrichtung ermittelt und von dieser an die Steuereinrichtung übergeben werden. Dabei erfolgt die Steuerung derart, dass in einer ersten Bearbeitungsphase mit einem vorher bestimmten Fluiddruck gearbeitet wird, wobei der Fluidvolumenstrom veränderlich ist, und dass in einer zweiten Bearbeitungsphase mit konstantem Fluidvolumenstrom gearbeitet wird, wohingegen der Fluiddruck veränderlich ist.

Eine besonders bevorzugte Weiterbildung der Erfindung ist dadurch gekennzeichnet, dass die Pumpeinrichtung eine Kolbenpumpe mit einem Kolben und einem Schrittmotor aufweist, der zum Verschieben des Kolbens vorgesehen ist, dass eine Hydraulikdruckerzeugungseinrichtung vorgesehen ist, mit welcher der Kolben auf einer dem Abtragungsfluid abgewandten Seite mit Hydraulikfluid beaufschlagbar ist, und dass die Steuereinrichtung mit dem Schrittmotor und der Hydraulikdruckerzeugungseinrichtung zum Einstellen des vorher bestimmten Fluiddruckes und des konstanten Fluidvolumenstromes in Wirkverbindung steht. Gemäß dieser bevorzugten Ausführungsform ist die Kolbenpumpe also dazu ausgelegt, sowohl den vorher bestimmten Fluiddruck in der ersten Bearbeitungsphase als auch den konstanten Fluidvolumenstrom in der zweiten Bearbeitungsphase zu erzeugen. Während der Schrittmotor dabei zum gezielten Verändern des Volumens eines Arbeitsraumes für das Abtragungsfluid und somit zum Erzeugen des konstanten Fluidvolumenstroms dienen kann, kann dieser Schrittmotor zum Erzeugen des vorher bestimmten Abtragungsfluiddruckes deaktiviert werden, so dass der Hydraulikdruck im Hydraulikfluid vollständig an das Abtragungsfluid übertragen werden kann. Die Regelung des Fluiddruckes auf den gewünschten, vorher bestimmten Wert während der ersten Bearbeitungsphase kann dann durch Regelung der Hydraulikdruckerzeugungseinrichtung erfolgen, die hierfür beispielsweise ein Druckregelventil aufweisen kann.

Die Erfindung wird nachfolgend anhand bevorzugter Ausführungsbeispiele näher erläutert, die schematisch in den Figuren dargestellt sind. In den Figuren zeigen:
- Fig. 1: den zeitlichen Verlauf des Fluiddruckes des Abtragungsfluides oberstromig der Durchgangsöffnung und den gleichzeitigen Verlauf des Fluidvolumenstromes des Abtragungsfluids durch die Durchgangsöffnung bei der Durchführung eines Ausführungsbeispiels des erfindungsgemäßen Verfahrens; und
- Fig. 2: eine Ausführungsform einer erfindungsgemäßen Vorrichtung.

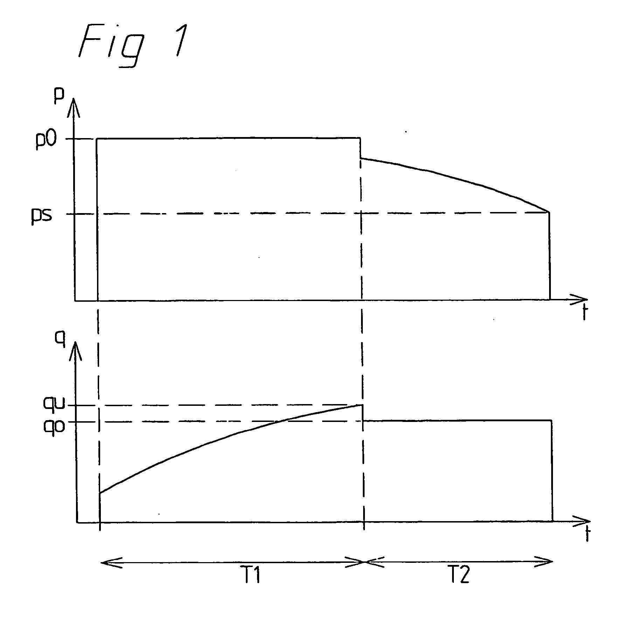

Der Verlauf des Fluiddruckes p und des Fluidvolumenstroms q des Abtragungsfluides über der Zeit t bei der Durchführung eines Ausführungsbeispiels des erfindungsgemäßen Verfahrens zum abrasiven Bearbeiten einer Durchgangsöffnung ist schematisch in Fig. 1 dargestellt. Während einer ersten Bearbeitungsphase T1, zu Beginn des erfindungsgemäßen Verfahrens, wird mittels einer Pumpeinrichtung im Abtragungsfluid oberstromig der Durchgangsöffnung ein vorher bestimmter Fluiddruck p0 erzeugt, der bei dem dargestellten Ausführungsbeispiel zeitlich konstant ist.

Angetrieben von diesem konstanten Fluiddruck p0 fließt das Abtragungsfluid mit veränderlichem Fluidvolumenstrom q unter Materialabtragung durch die Durchgangsöffnung. Mit fortschreitender Materialabtragung wird die Durchgangsöffnung verrundet und erweitert, so dass der Durchflusswiderstand für das Abtragungsfluid abnimmt und der Fluidvolumenstrom q trotz der Konstanz des Fluiddruckes p0 stetig zunimmt.

Erreicht der im Laufe der ersten Bearbeitungsphase T1 zunehmende Fluidvolumenstrom q, der mittels einer Messeinrichtung bestimmt wird, schließlich einen Umschaltwert qu, wird die Betriebsweise der Pumpeinrichtung umgeschaltet und die zweite Bearbeitungsphase T2 eingeleitet. Während dieser zweiten Bearbeitungsphase T2 wird mittels der Pumpeinrichtung ein zeitlich konstanter Fluidvolumenstrom q0 erzeugt, wohingegen der Fluiddruck p variabel gehalten wird. Um eine Druckänderung beim Übergang von der ersten Bearbeitungsphase T1 zur zweiten Bearbeitungsphase T2 gering zu halten, kann der konstante Fluidvolumenstrom q0 dabei bevorzugt etwa dem Umschaltwert qu des Fluidvolumenstroms q entsprechen, also dem Fluidvolumenstrom q, der unmittelbar vor Beginn der zweiten Bearbeitungsphase T2 vorliegt. Im dargestellten Ausführungsbeispiel ist der konstante Fluidvolumenstrom q0 geringfügig kleiner als der Umschaltwert qu.

Aufgrund des auch in der zweiten Bearbeitungsphase T2 kontinuierlich fortschreitenden Materialabtrages an der Durchgangsöffnung und der hieraus resultierenden Abnahme des Durchflusswiderstandes der Durchgangsöffnung, nimmt der Fluiddruck p oberstromig der Durchgangsöffnung im Laufe der zweiten Bearbeitungsphase T2 kontinuierlich ab. Dabei wird der Fluiddruck p wiederholt mittels der Messeinrichtung bestimmt. Sobald der Fluiddruck p einen Sollwert ps erreicht, der mit einem Sollwert für den Durchfluss korreliert ist, wird die Bearbeitung beendet, d.h. die Pumpeinrichtung wird druck- und strömungslos geschaltet und das Bauteil mit der Durchgangsöffnung entfernt. Die zweite Bearbeitungsphase T2 ist geeigneterweise kurz gegenüber der ersten Bearbeitungsphase T1.

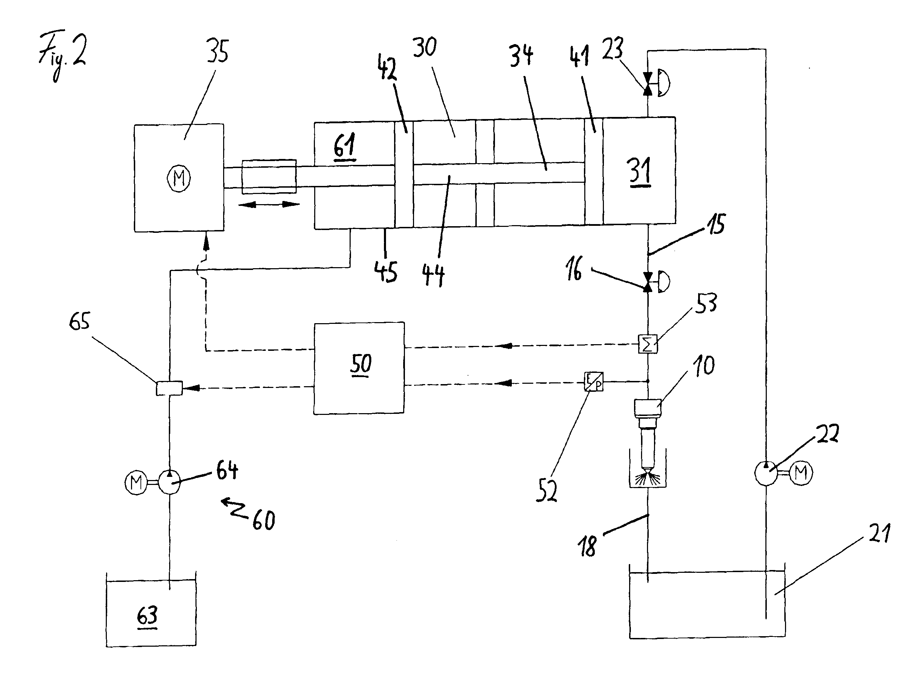

Ein Ausführungsbeispiel einer erfindungsgemäßen Vorrichtung zum Bearbeiten einer Durchgangsöffnung in einem Bauteil 10 ist in Fig. 2 dargestellt. Die Vorrichtung weist einen Vorratsbehälter 21 für Abtragungsfluid auf, das insbesondere ein hydroerosives Schleifmedium sein kann. Der Vorratsbehälter 21 steht über eine Vorlaufpumpe 22 und ein Absperrorgan 23 mit einem Arbeitsraum 31 einer Kolbenpumpe 30 in Fluidverbindung. Bei Betätigung der Kolbenpumpe 30 kann das Abtragungsfluid aus dem Arbeitsraum 31 über eine mit einem weiteren Absperrorgan 16 versehene Zuleitung 15 zur zu bearbeitenden Durchgangsöffnung im Bauteil 10 gelangen. Das dabei nach Durchgang durch die Durchgangsöffnung aus dem Bauteil 10 austretende Abtragungsfluid wird aufgesammelt und über eine Rückführleitung 18 in den Vorratsbehälter 21 zurückgeführt. Durch das fließende Abtragungsfluid wird die im Bauteil 10 befindliche, als Bohrung ausgebildete Durchgangsöffnung an ihrer Einlasskante verrundet, wodurch sich der Durchflusswiderstand des Bauteils reduziert.

Die Kolbenpumpe 30 ist hydraulisch unterstützt und schrittmotorbetrieben ausgebildet. Sie ist in der Lage, in der ersten Bearbeitungsphase T1 einen zeitlich konstanten Schleifvolumenstrom und in der zweiten, finalen Bearbeitungsphase T2 einen zeitlich konstanten Schleifdruck zu erzeugen. Die Kolbenpumpe 30 weist einen Kolben 34 mit einem ersten, vorderen Kolbenelement 41 und einem zweiten, hinteren Kolbenelement 42 auf, die beide an einer gemeinsamen Kolbenstange 44 angeordnet sind und mit dieser zusammen in einem Kolbengehäuse 45 längsverschiebbar sind. Während das erste Kolbenelement 41 den Arbeitsraum 31 für das Abtragungsfluid begrenzt, begrenzt das hintere Kolbenelement 42 einen Hydraulikarbeitsraum 61 für Hydraulikfluid. Dieser Hydraulikarbeitsraum 61 kann über eine motorbetriebene Hydraulikpumpe 64 und über ein als Proportionalventil ausgeführtes Hydraulikdruckventil 65 mit Hydraulikfluid aus einem Hydraulikvorratsbehälter 63 beaufschlagt werden. Die Hydraulikpumpe 64 bildet zusammen mit dem Hydraulikdruckventil 65 eine Hydraulikdruckerzeugungseinrichtung 60, mit der im Hydraulikarbeitsraum 61 ein vorher bestimmter Hydraulikdruck erzeugbar ist, und die hierzu mit dem Hydraulikarbeitsraum 61 fluidverbunden ist.

An einer rückwärtigen Verlängerung der Kolbenstange 44 ist ein Schrittmotor 35 angeordnet. Mittels dieses Schrittmotors 35 kann die Kolbenstange 44 zusammen mit den beiden Kolbenelementen 41, 42 im Kolbengehäuse 45 der Kolbenpumpe 30 längsverschoben werden. Zur Steuerung des Schrittmotors 35 sowie des Hydraulikdruckventils 65 ist eine als Steuercomputer ausgebildete Steuereinrichtung 50 vorgesehen, die mit dem Schrittmotor 35 und dem Hydraulikdruckventil 65 in Leitungsverbindung steht. Die Steuereinrichtung steht ferner mit einem Fluiddrucksensor 52 und einem Fluiddurchflussmesser 53 einer Messeinrichtung in Leitungsverbindung, die beide an der Zuleitung 15 zwischen der Kolbenpumpe 30 und dem Bauteil 10 angeordnet sind. Der Drucksensor 52 misst dabei den Vordruck in der Zuleitung 15 zum Bauteil 10.

Die Kolbenpumpe 30 ist in der Lage, während der ersten Bearbeitungsphase T1 einen konstanten Fluiddruck p0 zu erzeugen. Hierzu wird der Schrittmotor 35 momentfrei geschaltet und mittels der Hydraulikdruckerzeugungseinrichtung 60 ein dem konstanten Fluiddruck p0 entsprechender, konstanter Hydraulikdruck im Hydraulikarbeitsraum 61 erzeugt, wobei der konstante Hydraulikdruck über die beiden Kolbenelemente 41, 42 und die Kolbenstange 44 an das Abtragungsfluid im Arbeitsraum 31 weitergegeben wird. Zur Regelung des Hydraulikdruckes und somit des Abtragungsfluiddruckes p steuert die Steuereinrichtung 50 die Stellung des Hydraulikventils 65, wobei der Fluiddrucksensor 52 von der Steuereinrichtung 50 als Istwertgeber verwendet wird und die vom Fluiddrucksensor 52 erhaltenen Messwerte von der Steuereinrichtung 50 mit einem vorgegebenen Sollwert verglichen werden. Das Abtragungsfluid wird aus dem Arbeitsraum 31 der Kolbenpumpe 30 verdrängt und mit konstantem Druck ans Bauteil 10 geführt.

Die erste Bearbeitungsphase T1 bleibt solange aktiviert, bis sich am Fluiddurchflussmesser 53 ein Wert einstellt, der nur geringfügig über einem gewünschten Sollwert des Bauteiles 10 liegt. Zu diesem Zeitpunkt wird die Kolbenpumpe 30 auf einen konstanten Fluiddurchfluss umgeschaltet. Hierzu wird der Schrittmotor 35 der Kolbenpumpe 30 zugeschaltet. Der Schrittmotor 35 erzeugt einen konstanten Vorschub des Kolbens 34, wodurch die Kolbenpumpe 30 einen konstanten Schleifvolumenstrom generiert. Zur Entlastung des Schrittmotors 35 wird dabei mittels der Hydraulikdruckerzeugungseinrichtung 60 weiterhin ein Hydraulikdruck im Hydraulikarbeitsraum 61 erzeugt.

## Patentansprüche

1. Verfahren zum abrasiven Bearbeiten einer Durchgangsöffnung in einem Bauteil (10), insbesondere einer Steuer- und/oder Düsenbohrung eines Kraftstoffeinspritzventiles, mit einem Abtragungsfluid, **dadurch gekennzeichnet, dass**
- das Abtragungsfluid zunächst mit einem vorher bestimmten Fluiddruck (p0) durch die Durchgangsöffnung geleitet wird und ein sich dabei einstellender, veränderlicher Fluidvolumenstrom (q) durch die Durchgangsöffnung ermittelt wird, und
- bei Erreichen eines Umschaltwertes (qu) des ermittelten Fluidvolumenstroms (q) das Abtragungsfluid fortan so lange mit konstantem Fluidvolumenstrom (q0) durch die Durchgangsöffnung geleitet und der sich dabei einstellende Fluiddruck (p) ermittelt wird, bis der ermittelte Fluiddruck (p) einen Sollwert (ps) des Druckes erreicht.

2. Verfahren nach Anspruch 1,
**dadurch gekennzeichnet,**
**dass** der konstante Fluidvolumenstrom (q0) einem Betriebsvolumenstrom des fertigen Bauteiles entspricht.

3. Verfahren nach einem der Ansprüche 1 oder 2,
**dadurch gekennzeichnet,**
**dass** der Umschaltwert (qu) des Fluidvolumenstroms (q) zumindest annähernd gleich dem konstanten Fluidvolumenstrom (qO) ist, und/oder
**dass** der Umschaltwert (qu) des Fluidvolumenstromes höchstens 5%, insbesondere etwa 1% über einem Sollwert des Fluidvolumenstromes liegt.

4. Verfahren nach einem der Ansprüche 1 bis 3,
**dadurch gekennzeichnet,**
**dass** das Abtragungsfluid beim Bearbeiten der Durchgangsöffnung mit vorher bestimmtem Fluiddruck (p0) und beim Bearbeiten der Durchgangsöffnung mit konstantem Fluidvolumenstrom (q0) mittels einer Pumpeinrichtung zur Durchgangsöffnung gefördert wird, wobei die Pumpeinrichtung insbesondere eine hydraulisch unterstützte und durch einen Schrittmotor (35) betriebene Kolbenpumpe (30) aufweist.

5. Verfahren nach Anspruch 4,
**dadurch gekennzeichnet,**
**dass** der Schrittmotor (35) beim Bearbeiten der Durchgangsöffnung mit vorher bestimmtem Fluiddruck (p0) momentfrei geschaltet wird, und
**dass** der Schrittmotor (35) beim Erreichen des Umschaltwertes (qu) des ermittelten Fluidvolumenstromes (q) zum Erzeugen eines konstanten Kolbenvorschubes der Kolbenpumpe (30) zugeschaltet wird.

6. Verfahren nach einem der Ansprüche 4 oder 5,
**dadurch gekennzeichnet,**
**dass** zum Ermitteln des veranderlichen Fluidvolumenstroms (q) eine Kolbenvorschubgeschwindigkeit der Kolbenpumpe (30) bestimmt wird.

7. Verfahren nach einem der Ansprüche 1 bis 6,
**dadurch gekennzeichnet,**
**dass** der vorher bestimmte Fluiddruck (p0) vor Erreichen des Umschaltwertes (qu) des Fluidvolumenstroms variiert, insbesondere schrittweise oder kontinuierlich reduziert wird.

8. Verfahren nach einem der Ansprüche 1 bis 7,
**dadurch gekennzeichnet,**
**dass** beim Durchleiten des Abtragungsfluides durch die Durchgangsöffnung an dieser Durchgangsöffnung ein Gegendruck erzeugt wird.

9. Verfahren nach einem der Ansprüche 1 bis 8,
**dadurch gekennzeichnet,**
**dass** das Abtragungsfluid eine Flüssigkeit mit Abrasivpartikeln aufweist; wobei die Flüssigkeit insbesondere eine Viskosität aufweist, die einer Viskosität einer Betriebsflüssigkeit des fertigen Bauteils entspricht.

10. Vorrichtung zum abrasiven Bearbeiten einer Durchgangsöffnung in einem Bauteil mit einem Abtragungsfluid, insbesondere zur Durchführung des Verfahrens nach einem der Ansprüche 1 bis 9, mit
- einer Pumpeinrichtung zum Fördern des Abtragungsfluids,
- einer Steuereinrichtung (50), die mit der Pumpeinrichtung in Wirkverbindung steht,
- einer Zuleitung (15) zum Zuführen des Abtragungsfluids von der Pumpeinrichtung an die Durchgangsöffnung des Bauteils (10), und
- einer Messeinrichtung zum Bestimmen des Fluiddruckes (p) in der Zuleitung (15) und/oder des Fluidvolumenstromes (q) durch die Durchgangsöffnung, wobei die Messeinrichtung mit der Steuereinrichtung (50) in Signalverbindung steht,
**dadurch gekennzeichnet,**
- **dass** die Steuereinrichtung (50) zum Steuern der Pumpeinrichtung in der Weise ausgebildet ist, dass das Abtragungsfluid zunächst mit einem vorher bestimmten Fluiddruck (p0) bei veränderlichem Fluidvolumenstrom (q) durch die Durchgangsöffnung geleitet wird und bei Erreichen eines Umschaltwertes (qu) des Fluidvolumenstroms (q) das Abtragungsfluid fortan mit konstantem Fluidvolumenstrom (q0) durch die Durchgangsöffnung geleitet wird.

11. Vorrichtung nach Anspruch 10,
**dadurch gekennzeichnet,**
- **dass** die Pumpeinrichtung eine Kolbenpumpe (30) mit einem Kolben (34) und einem Schrittmotor (35) aufweist, der zum Verschieben des Kolbens (34) vorgesehen ist,
- **dass** eine Hydraulikdruckerzeugungseinrichtung (60) vorgesehen ist, mit welcher der Kolben (34) auf einer dem Abtragungsfluid abgewandten Seite mit Hydraulikfluid beaufschlagbar ist, und
- **dass** die Steuereinrichtung (50) mit dem Schrittmotor (35) und der Hydraulikdruckerzeugungseinrichtung (60) zum Einstellen des vorher bestimmten Fluiddruckes (p0) und des konstanten Fluidvolumenstromes
(q0) in Wirkverbindung steht.

## Claims

1. Method for abrasively machining a channel port in a component (10), in particular a control and/or nozzle borehole of a fuel injection valve, with an abrasive fluid,
**characterized in that**
- the abrasive fluid is initially passed through the channel port at a pre-defined fluid pressure (p0) and a resultant variable volumetric flow of fluid (q) passing through the channel port is determined and,
- on reaching a switch-over value (qu) of the determined volumetric flow of fluid (q), the abrasive fluid is from then on passed through the channel port with a constant volumetric flow of fluid (q0) and the fluid pressure (p) resulting therefrom is determined until such time that the determined fluid pressure (p) reaches a nominal value (ps) of the pressure.

2. Method according to claim 1,
**characterized in that**
the constant volumetric flow of fluid (q0) corresponds to an operating volumetric flow of the finished component.

3. Method according to any one of claims 1 or 2,
**characterized in that**
the switch-over value (qu) of the volumetric flow of fluid (q) is at least approximately equal to the constant volumetric flow of fluid (q0) and/or
**in that** the switch-over value (qu) of the volumetric flow of fluid lies at a maximum of 5%, in particular approximately 1% above a nominal value of the volumetric flow of fluid.

4. Method according to any one of claims 1 to 3,
**characterized in that**
on machining the channel port with a pre-defined fluid pressure (p0) and on machining the channel port with a constant volumetric flow of fluid (q0) the abrasive fluid is conveyed by means of a pump means to the channel port, the pump means having in particular a hydraulically assisted piston pump (30) which is operated by a stepping motor (35).

5. Method according to claim 4,
**characterized in that**
on machining the channel port with a pre-defined fluid pressure (p0) the stepping motor (35) is switched torque-free and,
on reaching the switch-over value (qu) of the determined volumetric flow of fluid (q), the stepping motor (35) is connected to the piston pump (30) in order to produce a constant piston feed movement of the piston pump (30).

6. Method according to any one of claims 4 or 5,
**characterized in that**
in order to determine the variable volumetric flow of fluid (q) a piston feed rate of the piston pump (30) is determined.

7. Method according to any one of claims 1 to 6,
**characterized in that**
before reaching the switch-over value (qu) of the volumetric flow of fluid the pre-defined fluid pressure (p0) is varied, in particular reduced gradually or continuously.

8. Method according to any one of claims 1 to 7,
**characterized in that**
on passing the abrasive fluid through the channel port a counter-pressure is generated on this channel port.

9. Method according to any one of claims 1 to 8,
**characterized in that**
the abrasive fluid is a liquid containing abrasive particles, the liquid having in particular a viscosity that corresponds to a viscosity of an operating liquid of the finished component.

10. Device for abrasively machining a channel port in a component with an abrasive fluid, in particular for carrying out the method according to any one of claims 1 to 9, comprising
- a pump means for conveying the abrasive fluid,
- a control means (50) which is in operative connection with the pump means,
- a supply line (15) for supplying the abrasive fluid from the pump means to the channel port of the component (10) and
- a measuring means for determining the fluid pressure (p) in the supply line (15) and/or the volumetric flow of fluid (q) passing through the channel port, the measuring means being in signal connection with the control means (50),
**characterized in that**
- in order to control the pump means the control means (50) is designed in such a manner that the abrasive fluid is initially passed through the channel port at a pre-defined fluid pressure (p0) while the volumetric flow of fluid (q) is variable and, on reaching a switch-over value (qu) of the volumetric flow of fluid (q), the abrasive fluid is from then on passed through the channel port with a constant volumetric flow of fluid (q0).

11. Device according to claim 10,
**characterized in that**
- the pump means has a piston pump (30) with a piston (34) and a stepping motor (35) which is provided for displacement of the piston (34),
- **in that** a hydraulic pressure generating means (60) is provided, by means of which hydraulic fluid can be applied to the piston (34) on a side facing away from the abrasive fluid, and
- **in that** the control means (50) is in operative connection with the stepping motor (35) and the hydraulic pressure generating means (60) in order to set the pre-defined fluid pressure (p0) and the constant volumetric flow of fluid (q0).

## Revendications

1. Procédé d'usinage abrasif d'une ouverture de passage dans une pièce (10), en particulier un orifice de commande et/ou de buse d'une soupape d'injection de carburant, avec un fluide abrasif,
***caractérisé en ce que***
- le fluide abrasif est d'abord envoyé à travers le passage avec une pression de fluide (p0) préalablement déterminée, et un débit volumique de fluide variable (q) s'instaurant pendant cette opération à travers le passage est relevé, et
- quand on atteint une valeur de basculement (qu) du débit volumique (q) de fluide relevé, le fluide abrasif est désormais envoyé à travers le passage avec un débit volumique de fluide constant (q0) et la pression de fluide (p) s'instaurant alors est relevée, jusqu'à ce que la pression de fluide (p) relevée atteigne une valeur de consigne (ps) de la pression.

2. Procédé selon la revendication 1, ***caractérisé en ce que*** le débit volumique de fluide constant (q0) correspond à un débit volumique de service de la pièce terminée.

3. Procédé selon l'une quelconque des revendications 1 ou 2,
***caractérisé***
***en ce que*** la valeur de basculement (qu) du débit volumique de fluide (q) est au moins approximativement identique au débit volumique de fluide constant (q0), et/ou
***en* ce *que*** la valeur de basculement (qu) du débit volumique de fluide est d'au plus 5 %, en particulier d'environ 1 % supérieure à une valeur de consigne du débit volumique de fluide.

4. Procédé selon l'une quelconque des revendications 1 à 3, ***caractérisé en* ce *que***, lors de l'usinage du passage avec une pression de fluide préalablement déterminée (p0) et lors de l'usinage du passage avec un débit volumique de fluide constant (q0), le fluide abrasif est envoyé à travers le passage au moyen d'un dispositif de pompage, le dispositif de pompage comprenant en particulier une pompe (30) à piston soutenue hydrauliquement et actionnée par un moteur pas à pas (35).

5. Procédé selon la revendication 4, ***caractérisé***
***en ce que*** le moteur pas à pas (35) est monté sans couple lors de l'usinage du passage avec une pression de fluide préalablement déterminée (p0), et
***en ce que*** le moteur pas à pas (35), lorsqu'on atteint la valeur de basculement (qu) du débit volumique de fluide (q) relevé, est actionné pour produire un déplacement constant du piston de la pompe (30) à piston.

6. Procédé selon la revendication 4 ou 5, ***caractérisé en ce que**,* pour relever le débit volumique de fluide variable (q), une vitesse de déplacement du piston de la pompe à piston (30) est relevée.

7. Procédé selon l'une quelconque des revendications 1 à 6, ***caractérisé en ce que*** la pression de fluide (p0) préalablement déterminée est modifiée avant d'atteindre la valeur de basculement (qu) du débit volumique de fluide, en particulier est réduite par étapes ou de façon continue.

8. Procédé selon l'une quelconque des revendications 1 à 7, ***caractérisé en ce que**,* lors du passage du fluide abrasif à travers le passage, une contre-pression est produite sur ce passage.

9. Procédé selon l'une quelconque des revendications 1 à 8, ***caractérisé en ce que*** le fluide abrasif comprend un liquide avec des particules abrasives, le liquide présentant en particulier une viscosité qui correspond à une viscosité d'un liquide de service de la pièce finie.

10. Dispositif d'usinage abrasif d'un passage dans une pièce avec un fluide abrasif, en particulier pour appliquer le procédé selon l'une quelconque des revendications 1 à 9, avec
- un dispositif de pompage pour transporter le fluide abrasif,
- un dispositif de commande (50) qui est en liaison active avec le dispositif de pompage,
- une conduite d'alimentation (15) pour acheminer le fluide abrasif du dispositif de pompage jusqu'au passage de la pièce (10),
- un dispositif de mesure pour relever la pression du fluide (p) dans la conduite d'alimentation (15) et/ou le débit volumique du fluide (q) à travers le passage, le dispositif de mesure étant en liaison de signal avec le dispositif de commande (50),
***caractérisé en ce que***
- le dispositif de commande (50) est conformé pour commander le dispositif de pompage de telle manière que le fluide abrasif soit d'abord envoyé à travers le passage avec une pression de fluide (p0) préalablement déterminée et un débit volumique de fluide (q) variable à travers le passage et, que, lorsque l'on atteint une valeur de basculement (qu) du débit volumique de fluide (q), le fluide abrasif soit désormais envoyé à travers le passage avec un débit volumique de fluide (q0) constant.

11. Dispositif selon la revendication 10, ***caractérisé***
- ***en ce que*** le dispositif de pompage comprend une pompe (30) à piston avec un piston (34) et un moteur pas à pas (35) qui est prévu pour déplacer le piston (34),
- ***en ce qu***'un dispositif (60) producteur de pression hydraulique est prévu, avec lequel le piston (34) peut être chargé avec du fluide hydraulique du côté opposé au fluide abrasif, et
- ***en ce que*** le dispositif de commande (50) est en liaison active avec le moteur pas à pas (35) et avec le dispositif producteur de pression hydraulique (60) pour régler la pression de fluide (p0) préalablement déterminée et le débit volumique de fluide constant.
